# FASCICULE DE BREVET EUROPEEN

(11) **EP 1 294 643 B1**
(45) Date de publication et mention de la délivrance du brevet: **13.10.2004**
(21) Numéro de dépôt: 01949561.3
(22) Date de dépôt: 28.06.2001
(51) Int. Cl.: C02F 1/52, B01D 21/08, B01D 21/00

(54) **PROCEDE ET DISPOSITIF DE TRAITEMENT DES EAUX AVEC LESTANT INJECTE EN ZONE TRANQUILISEE**
VERFAHREN UND VORRICHTUNG ZUR BEHANDLUNG VON WÄSSERN MIT IN BERUHIGTEN ZONEN INJIZIERTEM BALLASTHILFSMITTEL
METHOD AND DEVICE FOR TREATING WATER WITH BALLAST INJECTED IN STILLING ZONE

(30) Priorité: 29.06.2000 FR 0008385
(43) Date de publication de la demande: 26.03.2003
(73) Titulaire: SOCIETE D'AMENAGEMENT URBAIN ET RURAL, 78280 Guyancourt (FR)
(72) Inventeur: BRIDOUX, Gilbert, F-78760 Jouars Pontchartrain (FR)
(74) Mandataire: Ahner, Francis
(86) Numéro de dépôt international: PCT/FR2001/002059
(87) Numéro de publication internationale: WO 2002/000556

(56) Documents cités:
- EP-A- 0 003 327
- EP-A- 0 139 572
- EP-A- 0 330 582
- EP-A- 0 524 039
- EP-A- 0 680 933
- EP-A- 0 767 143
- WO-A-98/32701
- US-A- 4 388 195
- US-A- 4 654 139

## Description

La présente invention concerne un procédé et un dispositif de traitement des eaux utilisant les techniques de coagulation, floculation et décantation. Ce procédé de traitement d'effluents est plus particulièrement adapté au traitement des eaux pluviales qui présentent de fortes concentration en matières en suspension (MES).

Le domaine de cette invention est celui des procédés physico-chimiques qui visent à séparer les particules en suspension dans l'effluent à traiter, en les amalgamant sous forme de "flocs", qui sont ensuite séparés par décantation. Les opérations successives, qui comprennent généralement les étapes de coagulation, de floculation et de décantation, sont réalisées dans différents compartiments, on utilise le plus souvent les compartimens d'un même appareil appelé décanteur.

Classiquement, le premier de ces compartiments correspond à une zone dans laquelle on effectue une étape de coagulation. Dans cette étape, les charges électriques portées par les particules en suspension sont neutralisées grâce à l'injection de sels de fer ou d'aluminium.

Le deuxième compartiment est le site de la floculation, où les particules préalablement neutralisées se rencontrent et s'agglomèrent de façon à constituer le floc, grâce à l'addition d'un polymère.

Le dernier compartiment correspond à l'étape de décantation, où les flocs et l'eau sont séparés. L'ensemble des flocs décantés constitue la boue. La principale amélioration apportée par les dernières techniques, consiste à augmenter la densité des flocs en y insérant un matériau minéral dense, en général, du sable fin.

Deux techniques s'affrontent dans le domaine :

La première est basée sur "l'effet de germe", où les particules neutralisées lors de la coagulation s'agglomèrent avec du lest, faisant croître le floc autour de ce dernier. Le lest est donc injecté dès l'étape de coagulation comme l'indique FR 2 627 704 B1, voire, au début de l'étape de floculation, comme le décrit EP 0 680 933 A1. Afin de diminuer les coûts d'exploitation, le lest doit être récupéré et recirculé. Cette opération qui est réalisée préférentiellement par hydrocyclonage, présente un inconvénient important, car la séparation par hydrocyclone doit être effectuée à partir d'un mélange dilué. Les boues en excès, issues de cette séparation sont donc faiblement concentrées, de l'ordre du gramme par litre.

La seconde technique utilise le lest comme simple "alourdisseur du floc". Il est incorporé aux boues recirculées, appelées alors "boues densifiées", qui sont injectées au niveau du floculateur, un exemple de mise en oeuvre est décrit dans FR 2 758 812 A1. La principale limite apportée à cette technique repose sur le fait que l'injection de lest au niveau du floculateur introduit des zones macroscopiquement hétérogènes ; il faut alors augmenter l'agitation au sein du compartiment. Par contre, l'ajout des boues utilisées comme "masse de contact", nécessite une agitation lente afin de parfaire la maturation du floc. Cet antagonisme limite fortement les performances du procédé en ce qui concerne la charge hydraulique.

Le procédé de traitement selon la présente invention permet de pallier les inconvénients des techniques décrites ci-dessus.

Le procédé de traitement selon la présente invention présente l'avantage d'augmenter notablement la charge hydraulique lors de la décantation et d'extraire les boues concentrées, tout en conservant une eau traitée de qualité. On rappellera que la charge hydraulique correspond au débit de l'effluent traité par unité de surface de lamelles, la surface des lamelles considérées étant la section horizontale constituée par l'ensemble desdites lamelles.

La présente invention concerne un procédé amélioré de décantation des flocs dans lequel le lest ou agent de décantation est injecté alors que le floc est mature, les conditions de mise en oeuvre du procédé étant déterminées de façon précise pour atteindre une élimination de l'ordre de 80 % des MES avec une vitesse de passage dans les lamelles de l'ordre de 250 m/h.

Le procédé de traitement des eaux selon l'invention est effectué dans un décanteur sur un effluent à traiter chargé de matières en suspension, il comprend au moins une étape de coagulation effectuée dans au moins une zone de coagulation, au moins une étape de floculation effectuée dans au moins une zone de floculation et au moins une étape de décantation, dans laquelle les boues comprenant les matières en suspension sont séparées de l'effluent ainsi clarifié, effectuée dans au moins une zone de décantation.

Conformément au procédé de l'invention, un adjuvant de décantation est introduit au niveau d'un compartiment spécifique, désigné zone de capture, qui est une zone non agitée, située après la zone de floculation et avant la zone de décantation.

Conformément à la présente invention, cette zone de capture est dimensionnée de manière à créer une veine liquide dans laquelle l'adjuvant de décantation est injecté de manière homogène. Une partie au moins des flocs lestés décante directement à la partie inférieure de cette zone de capture d'où elle est régulièrement soutirée.

Selon une autre caractéristique de la présente invention, la vitesse hydraulique au sein de la zone de capture reste inférieure à environ 100 m/h au débit nominal du procédé.

Selon une autre caractéristique de la présente invention, l'adjuvant de décantation est injecté, à la partie supérieure de la zone de capture, en différents points d'injection régulièrement espacés entre eux.

Selon une autre caractéristique de la présente invention, le rythme de soutirage des boues à la partie inférieure de la zone de capture est compris entre 0,5 % et 1 % du débit d'eau traitée.

Selon une autre caractéristique de la présente invention, on observe un gradient de vitesse dans la zone de floculation, compris entre 50 s⁻¹ et 300 s⁻¹.

Selon une autre caractéristique de la présente invention, les flocs formés dans la zone de capture présentent un diamètre moyen supérieur à environ 3 mm et de préférence compris entre 3 mm et 15 mm.

Selon une autre caractéristique de la présente invention, les flocs présentent une structure compacte comportant plusieurs grains d'adjuvant capturés.

Selon une autre caractéristique de la présente invention, les boues soutirées de la zone de capture sont mélangées régulièrement aux boues soutirées de la zone de décantation pour suivre le même circuit de traitement et de séparation de l'adjuvant de décantation, ce dernier étant réintroduit à la partie supérieure de la zone de capture.

Selon une autre caractéristique de la présente invention, l'adjuvant de décantation est un matériau minéral possédant une susceptibilité magnétique importante.

Selon une autre caractéristique de la présente invention, l'adjuvant de décantation est un oxyde de fer, en particulier la magnétite, la samarskite, la franklinite, la ferberite, la pyrrhotite.

Selon une autre caractéristique de la présente invention, l'adjuvant de décantation est de la magnétite présentant une granulométrie moyenne comprise, à 90 %, entre 100 µm et 250 µm.

Selon une autre caractéristique de la présente invention, la concentration en magnétite injectée dans la zone de capture est comprise entre 3 g/l et 4 g/l d'eau traitée.

Selon une autre caractéristique de la présente invention, l'adjuvant de décantation est séparé des boues et récupéré par un dispositif d'aimantation en deux étapes.

Selon une variante du procédé objet de la présente invention, l'étape de décantation est mise en oeuvre dans un décanteur lamellaires comprenant une pluralité de plaques inclinées, parallèles entre elles et prévues à la partie supérieure du décanteur. L'intérêt majeur de la décantation lamellaire par rapport à la décantation classique repose sur la capacité à traiter une grande quantité d'effluent dans un petit volume. Cette performance s'exprime essentiellement au travers de la charge hydraulique. Actuellement, les décanteurs lamellaires atteignent des charges hydrauliques maximales de l'ordre de 130 m/h (FR 2 758 812 A1).

Le procédé selon l'invention peut être mis en oeuvre de la façon suivante : un effluent à traiter est introduit dans le décanteur au niveau de la zone dite de coagulation. Dans cette zone, qui est maintenue agitée, on introduit au moins un adjuvant de coagulation qui est par exemple un sel de métal : chlorure ferrique ou sulfate d'aluminium. Lors de l'étape de coagulation, les matières en suspension dans l'effluent s'agrègent autour de l'adjuvant de coagulation pour forme un microfloc.

L'effluent de la zone de coagulation est introduit au niveau de la zone de floculation du décanteur.

Dans cette zone de floculation, qui est maintenue agitée, on introduit au moins un adjuvant de floculation qui est par exemple un polymère cationique, anionique ou neutre, naturel ou synthétique. Lors de l'étape de floculation, les matières en suspension dans l'effluent s'agglomèrent autour de l'adjuvant de floculation ce qui permet la croissance du microfloc.

L'effluent de la zone de floculation est introduit au niveau de la zone capture qui est une zone non agitée formant une veine liquide dans laquelle l'adjuvant de décantation se trouve injecté de manière homogène.

L'agitation des zones de maturation du floc (zone de coagulation et zone de floculation) peut être réalisée par des moyens mécaniques (agitateurs) ou par une injection d'air. En ce qui concerne la zone de floculation, un paramètre important à considérer est le gradient de vitesse G, classiquement, il est compris entre 70 s⁻¹ et 300 s⁻¹. Dans le cas de flocs lestés, G peut être 10 fois plus élevé comme le rapporte le brevet FR 2 627 704 B1.

Chacune des zones de coagulation et de floculation peuvent comprendre une ou plusieurs cuves, généralement ces zones comprennent d'une à trois cuves et de préférence une seule cuve.

Après ces traitements de maturation du floc, l'effluent à traiter est introduit dans une zone intermédiaire, dite zone de capture, non agitée, équipée à sa partie inférieure d'un dispositif de soutirage des boues.

La zone de décantation disposée en aval de la zone de capture, peut comprendre une ou plusieurs cuves, généralement cette zone comprend d'une à trois cuves.

L'adjuvant de décantation, introduit dans la zone de capture, possède des propriétés de lestant, c'est-à-dire d'alourdir le floc afin d'en faire descendre une partie vers le fond du compartiment de capture, et permettant l'entraînement d'une autre partie du floc chargé, en direction de la zone de décantation.

A la sortie de la zone de décantation on obtiendra ainsi deux phases distinctes. Une phase liquide correspondant à l'effluent clarifié et une phase au moins en partie solide correspondant aux boues. Ces boues comprennent les matières en suspension, les adjuvants de décantation, les adjuvants de coagulation et de floculation, ainsi qu'un liquide intesticiel. Cette phase en partie solide est récupérée principalement au fond de la zone de décantation, mais pour partie également au bas de la zone de capture.

Tous les adjuvants de décantation connus de l'homme du métier tels que le sable peuvent être utilisés pour réaliser la décantation dans le procédé selon la présente invention, généralement l'adjuvant de décantation présente une granulométrie comprise entre 30 micromètres (µm) et 600 micromètres (µm). Les matériaux minéraux possédant une susceptibilité magnétique importante comme les oxydes de fer et en particulier la magnétite, la samarskite, la franklinite, la ferberite, la pyrrhotite seront préférés. D'une manière générale, on préférera un matériau qui combine à la fois des propriétés ferromagnétiques, une densité élevée, par exemple supérieure à 5kg/dm³, et une insolubilité totale dans les conditions classiques du traitement de l'eau. Ces matériaux utilisés comme adjuvant de décantation permettent de lester les agrégats de particules initialement présentes (flocs) et d'accélérer leur décantation.

Selon une variante préférée du procédé selon la présente invention, l'adjuvant de décantation est extrait des boues, éventuellement il est soumis à un traitement, comme par exemple un rinçage, puis il est recyclé vers au moins une zone non agitée. La séparation peut être effectuée par tamisage, centrifugation ou par tout autre moyen adapté connu de l'homme du métier.

Lorsque l'adjuvant de décantation est un matériau possédant une susceptibilité magnétique importante, la séparation de l'adjuvant de décantation et des boues est basée sur les propriétés magnétiques de cet adjuvant. Parmi les systèmes utilisés, on compte notamment les dispositifs contenant un aimant fixe entouré d'un tambour rotatif. Cet aimant crée un champ magnétique de part et d'autre de la surface du tambour qui est limité à une zone caractérisée du dispositif. Dans ce cas, l'adjuvant de décantation est séparé des boues et récupéré par un dispositif d'aimantation en deux étapes.

La mise en oeuvre de tels dispositifs est la suivante : dans un premier temps, le mélange constitué des boues et de l'adjuvant de décantation est amené au contact du tambour rotatif, à la surface duquel seul est retenu l'adjuvant, du fait du champ magnétique. Les boues sans adjuvant sont évacuées du dispositif par simple système de surverse. Dans un deuxième temps, l'adjuvant retenu sur le tambour est entraîné par le mouvement de rotation et s'éloigne de la zone de champ magnétique. Dans un troisième temps, l'adjuvant qui n'est plus soumis au champ magnétique quitte la surface du tambour du fait de la gravité.

On peut prévoir de placer ce dispositif de séparation magnétique au-dessus d'une cuve de récupération, l'adjuvant de décantation tombe alors dans ladite cuve pour être ensuite envoyé dans la zone de capture. Un pareil système permet de redistribuer l'adjuvant de décantation de façon continue avec un minimum de perte de l'agent lestant.

Selon une variante du procédé objet de la présente invention, l'adjuvant magnétique est démagnétisé avant d'être réintroduit au niveau de la zone de capture.

Les boues concentrées non captées au niveau du dispositif de séparation magnétique sont récupérées dans une cuve d'évacuation, elles peuvent ensuite être réintroduites au niveau de la zone de capture ou envoyées vers un circuit de traitement des boues en excès. Dans ce dernier cas, avant tout traitement, les boues traversent un dispositif de récupération de la magnétite présente à l'état de traces. Dans cette étape d'affinage, les boues percolent autour de barreaux magnétiques puissants qui retiennent les éventuelles traces de magnétite.

La présente invention concerne également un dispositif pour la mise en oeuvre du procédé selon la présente invention comprenant successivement :
- une zone de coagulation munie d'un moyen d'agitation, comprenant une conduite d'introduction de l'effluent à traiter, une conduite d'introduction de l'adjuvant de coagulation et une conduite d'évacuation de l'effluent de la zone de coagulation ;
- une zone de floculation munie d'un moyen d'agitation, comprenant une conduite d'introduction de l'effluent à traiter, une conduite d'introduction de l'adjuvant de floculation et une conduite d'évacuation de l'effluent de la zone de floculation ;
- une zone de capture comprenant une conduite d'alimentation de l'effluent à décanter et au moins une conduite d'introduction de l'adjuvant de décantation, ainsi qu'une conduite de soutirage d'une partie au moins des boues décantées ;
- une zone de décantation comprenant une conduite d'introduction de l'effluent à décanter, une conduite d'évacuation de l'effluent clarifié et une conduite d'évacuation des boues décantées.

Selon une autre caractéristique de l'invention, le dispositif pour la mise en oeuvre du procédé selon l'invention comprend au moins une conduite d'évacuation de l'adjuvant de décantation située en aval de la zone de capture et/ou de la zone de décantation, cette conduite d'évacuation de l'adjuvant de décantation étant reliée à une conduite d'introduction de l'adjuvant de décantation dans la zone de capture, avec interposition d'un dispositif de séparation des boues et de l'agent de décantation.

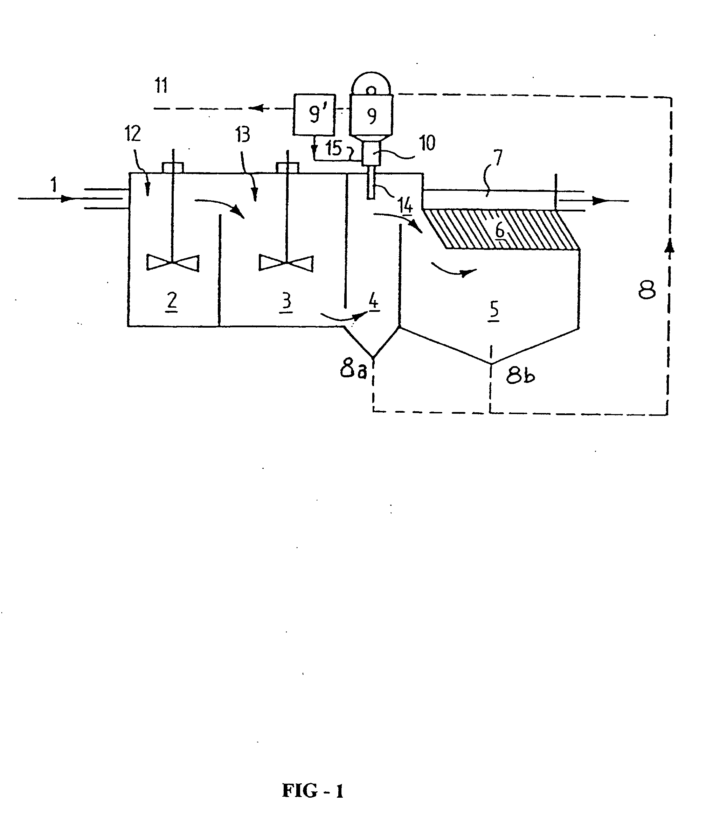

La présente invention sera décrite ci-après plus en détails notamment en référence à un mode de réalisation particulier du dispositif selon l'invention tel qu'illustré à la Figure 1 annexée.

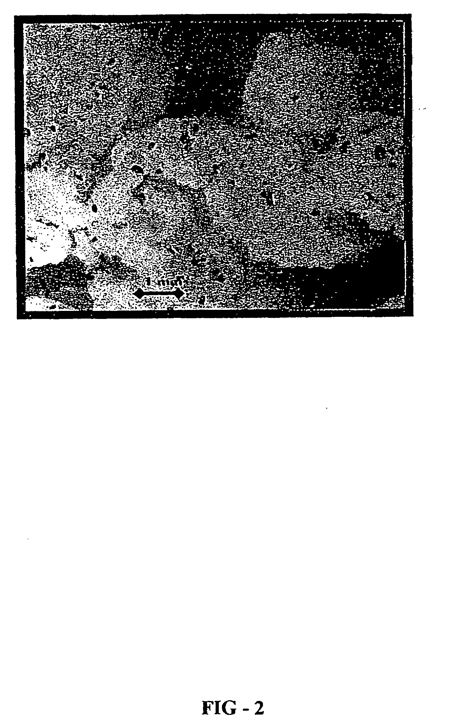

La Figure 2 représente une photographie des flocs formés dans la zone de capture, chaque floc ayant capturé plusieurs grains de magnétite.

La Figure 1 est une représentation schématique du dispositif permettant la mise en oeuvre du procédé selon l'invention. Pareille installation comporte en série :
- une conduite d'introduction de l'effluent à traiter 1 dans une zone de coagulation 2 munie d'un élément d'agitation, et d'une conduite d'introduction d'un adjuvant de coagulation 12 ;
- une zone de floculation 3 munie d'un élément d'agitation et d'une conduite d'introduction d'un adjuvant de floculation 13 ;
- une chambre de capture 4 munie d'une conduite d'introduction d'un adjuvant de décantation 14. La partie inférieure 8a de la zone de capture 4 est réalisée sous la forme d'un site de soutirage des boues.
- une zone de décantation 5, comprenant à sa partie supérieure une goulotte de récupération des effluents traités 7 et un élément lamellaire 6, et par ailleurs également munie à sa partie inférieure d'un site de soutirage des boues 8b.

Dans le cadre de la présente invention, il apparaît ainsi qu'une partie des flocs lestés décante directement au pied de la zone de capture 4, où elle s'accumule réduisant ainsi petit à petit la section de passage. Il est donc nécessaire de soutirer régulièrement à cet endroit les boues formées, ce soutirage s'effectuant de préférence à un rythme compris entre 0,5 % et 1% du débit d'eau traitée. Ces boues soutirées au niveau du site 8a sont alors mélangées aux boues soutirées en zone de décantation au voisinage du site correspondant 8b et poursuivent le même circuit de traitement.

Ce circuit se trouve schématisé sur la Figure 1 annexée par la présence d'un séparateur magnétique comportant deux zones 9 et 9' et une conduite d'évacuation des boues 11. Le séparateur magnétique 9 est alimenté en mélange boues + adjuvant de décantation via la conduite 8. Il comporte en outre une bobine démagnétisante 10 qui est alimentée en magnétite issue du séparateur magnétique 9' par l'intermédiaire de la conduite 15.

La zone de capture, située entre la zone de floculation et la zone de décantation, a deux fonctions principales importantes. Dans cette zone il est tout d'abord essentiel de conserver l'intégrité du floc néo-formé et d'assurer la rencontre efficace entre le floc et les grains de magnétite. A cet effet, il est donc essentiel de dimensionner la zone de capture de façon appropriée.

Dans un mode de réalisation particulier testé, la zone de capture possédait des dimensions particulières, notamment concernant sa section horizontale, pour créer une veine liquide, sur laquelle sont répartis de façon homogène les différents points d'injection de la magnétite. Pour la mise en oeuvre d'un traitement correspondant à 2 m³/h, les dimensions de cette zone sont par exemple les suivantes :
- hauteur : 1000 mm
- largeur : 360 mm
- longueur : 60 mm

Dans de pareilles conditions, l'injection de la magnétite est répartie sur toute la largeur en 4 points espacés d'environ 10 cm.

Il est également important de prendre en compte la vitesse hydraulique au sein de cette zone de capture. Au débit nominal du procédé de traitement, il est avantageux que cette vitesse hydraulique ne dépasse pas 100 m/h, de manière à ne pas déstructurer les flocs formés. Pareille mesure de précaution s'applique aux passages singuliers, c'est-à-dire les passages entre zone de floculation/zone de capture et zone de capture/zone de décantation.

Les résultats des essais effectués sur une telle installation ayant une capacité de traitement de 2 m³/h ont confirmé le fonctionnement optimal du procédé selon la présente invention. En effet, plus de 80 % des MES ont été éliminées avec une vitesse de passage dans les lamelles du décanteur de l'ordre de 250 m/h.

Pour atteindre un tel résultat, il est essentiel d'obtenir, dans la zone de capture, un floc d'aspect général relativement gros et compact contenant le moins d'eau possible.

Un tel floc, par exemple représenté sur la Figure 2, doit contenir plusieurs grains de magnétite de façon que l'ensemble du système floc/magnétite possède une masse volumique suffisamment élevée pour que sa vitesse de décantation dans cette zone de capture soit supérieure à la vitesse ascensionnelle du flux hydraulique appliquée dans ce procédé.

La constitution du floc est tout d'abord déterminée par l'injection d'une quantité précise de réactifs, c'est-à-dire de coagulants et de floculants dans les zones correspondantes, pour traiter une quantité donnée de pollution ici représentée par les MES.

Etant donné que le flux de pollution entrant dans le procédé varie en fonction du temps, il est donc essentiel de pouvoir corriger continuellement la dose de chaque réactif injecté. A cet effet, un asservissement est donc réalisé grâce à un automate qui, à partir des mesures en continu du débit et de la concentration en MES, gère les débits des pompes d'injection des différents réactifs. Le taux optimal de chaque réactif est préalablement défini grâce à la technique du "jar-test".

Il est essentiel de remarquer que la taille des flocs est également déterminée par l'énergie dissipée dans la zone de floculation. Cette énergie, représentée par le gradient de vitesse, doit être comprise entre environ 50 s⁻¹ et environ 300 s⁻¹. Dans ces conditions, il a été observé que le diamètre des flocs variait alors entre environ 3 mm et 15 mm, ce qui permet d'assurer une capture maximum de grains de magnétite telle qu'illustrée sur la photographie de la Figure 2 annexée.

De préférence, la magnétite sélectionnée présente une granulométrie moyenne comprise à 90 % entre 100 µm et 250 µm. La concentration optimale en magnétite injectée lors de la mise en oeuvre du procédé selon l'invention est comprise entre environ 3 g/l et 4 g/l d'eau traitée. Tout comme les autres réactifs, la magnétite est injectée à une vitesse qui est asservie au flux de pollution à traiter.

On indiquera dans le tableau ci-après les résultats observés avec un taux croissant en magnétite, la concentration moyenne en MES dans l'eau traitée variant de 360 mg/l à 510 mg/l.

| | | | | | |
|---|---|---|---|---|---|
| Débit traité (m³/h) | 2 | 2 | 2 | 2 | 2 |
| Vitesse ascensionnelle (m/h) | 250 | 250 | 250 | 250 | 250 |
| Taux de magnétite (g/l) | 0 | 1,1 | 1,8 | 3,6 | 3,9 |
| Elimination des MES (%) | 48 | 75 | 77 | 83 | 84 |

L'examen de ce tableau démontre que, dès la concentration de 1g/l en magnétite, on obtient des taux d'élimination en MES de 75 %. Pour obtenir des taux d'élimination des MES nettement supérieurs à 80 %, on aura toutefois recours à une concentration en magnétite plus élevée de l'ordre de 3 g/l à 4 g/l.

## Revendications

1. Procédé de traitement des eaux, effectué dans un décanteur sur un effluent à traiter chargé de matières en suspension et comprenant au moins une étape de coagulation effectuée dans au moins une zone de coagulation, au moins une étape de floculation effectuée dans au moins une zone de floculation, au moins une étape de décantation effectuée dans au moins une zone de décantation, et dans laquelle, une partie des boues contenant les matières en suspension est séparée de l'effluent clarifié, **caractérisé en ce qu'**un adjuvant de décantation est introduit au niveau d'au moins une zone de capture, non agitée, située entre la zone de floculation et la zone de décantation, la zone de capture étant dimensionnée de manière à créer une veine liquide dans laquelle l'adjuvant de décantation est injecté de manière homogène, et **en ce qu'**une partie des flocs lestés décante directement à la partie inférieure de cette zone de capture d'où elle se trouve régulièrement soutirée.

2. Procédé selon la revendication 1, **caractérisé en ce que**, au débit nominal du procédé, la vitesse hydraulique au sein de la zone de capture reste inférieure à environ 100 m/h.

3. Procédé selon l'une des revendications 1 et 2, **caractérisé en ce que** l'adjuvant de décantation est injecté, à la partie supérieure de la zone de capture, en différents points d'injection régulièrement espacés entre eux.

4. Procédé selon la revendication 3, **caractérisé en ce que** le rythme de soutirage des boues à la partie inférieure de la zone de capture est compris entre 0,5 % et 1 % du débit d'eau traitée.

5. Procédé selon la revendication 4, **caractérisé en ce que** l'on observe un gradient de vitesse dans la zone de floculation, compris entre 50 s⁻¹ et 300 s⁻¹.

6. Procédé selon la revendication 5, **caractérisé en ce que** les flocs formés dans la zone de capture présentent un diamètre moyen supérieur à environ 3 mm et de préférence compris entre 3 mm et 15 mm.

7. Procédé selon la revendication 6, **caractérisé en ce que** les flocs présentent une structure compacte comportant plusieurs grains d'adjuvant capturés.

8. Procédé selon la revendication 7, **caractérisé en ce que** les boues soutirées de la zone de capture sont mélangées régulièrement aux boues soutirées de la zone de décantation pour suivre le même circuit de traitement et de séparation de l'adjuvant de décantation, ce dernier étant réintroduit à la partie supérieure de la zone de capture.

9. Procédé selon l'une des revendications précédentes, **caractérisé en ce que** l'adjuvant de décantation est un matériau minéral possédant une susceptibilité magnétique importante.

10. Procédé selon la revendication 9, **caractérisé en ce que** l'adjuvant de décantation est un oxyde de fer, en particulier la magnétite, la samarskite, la franklinite, la ferberite, la pyrrhotite.

11. Procédé selon l'une des revendications précédentes, **caractérisé en ce que** l'adjuvant de décantation est de la magnétite présentant une granulométrie moyenne comprise, à 90 %, entre 100 µm et 250 µm.

12. Procédé selon la revendication 11, **caractérisé en ce que** la concentration en magnétite injectée dans la zone de capture est comprise entre 3 g/l et 4 g/l d'eau traitée.

13. Procédé selon l'une des revendications précédentes, **caractérisé en ce que** l'adjuvant de décantation est séparé des boues et récupéré par un dispositif d'aimantation en deux étapes.

14. Dispositif pour la mise en oeuvre du procédé selon l'une des revendications précédentes, comprenant successivement :
- une zone de coagulation munie d'un moyen d'agitation, comprenant une conduite d'introduction de l'effluent à traiter, une conduite d'introduction de l'adjuvant de coagulation et une conduite d'évacuation de l'effluent de la zone de coagulation ;
- une zone de floculation munie d'un moyen d'agitation, comprenant une conduite d'introduction de l'effluent à traiter, une conduite d'introduction de l'adjuvant de floculation et une conduite d'évacuation de l'effluent de la zone de floculation ;
- une zone de capture comprenant une conduite d'alimentation de l'effluent à décanter et au moins une conduite d'introduction de l'adjuvant de décantation, ainsi qu'une conduite de soutirage d'une partie au moins des boues décantées ;
- une zone de décantation comprenant une conduite d'introduction de l'effluent à décanter, une conduite d'évacuation de l'effluent clarifié et une conduite d'évacuation des boues décantées.

15. Dispositif selon la revendication 14, **caractérisé en ce qu'**il comprend au moins une conduite d'évacuation de l'adjuvant de décantation située en aval de la zone de capture et/ou de la zone de décantation, cette conduite d'évacuation de l'adjuvant de décantation étant reliée à une conduite d'introduction de l'adjuvant de décantation dans la zone de capture, avec interposition d'un dispositif de séparation des boues et de l'agent de décantation.

## Patentansprüche

1. Verfahren zur Behandlung von Wässern, welches in einem Absetzbecken an einem zu behandelnden Abwasser, welches mit in Suspension befindlichen Materialien beladen ist, ausgeführt wird und wenigstens einen Koagulationsschritt, welcher in wenigstens einer Koagulationszone ausgeführt wird, wenigstens einen Ausflockungsschritt, welcher in wenigstens einer Ausflockungszone ausgeführt wird, wenigstens einen Absetzschritt, welcher in wenigstens einer Absetzzone ausgeführt wird und in welchem ein Teil der Schlämme, welche die in Suspension befindlichen Materialien enthalten, von dem geklärten Abwasser abgetrennt wird, umfasst, **dadurch gekennzeichnet, dass** ein Absetzhilfsstoff auf der Ebene von wenigstens einer Einfangzone, welche nicht bewegt wird, welche sich zwischen der Ausflockungszone und der Absetzzone befindet, eingespeist wird, wobei die Einfangzone so dimensioniert ist, dass ein Flüssigkeitsstrahl erzeugt wird, in welchen der Absetzhilfsstoff auf homogene Weise injiziert wird, und dass ein Teil der mit Ballast beladenen Flocken sich direkt in dem unteren Abschnitt dieser Einfangzone absetzt, von wo er regelmäßig abgezogen wird.

2. Verfahren nach Anspruch 1, **dadurch gekennzeichnet, dass** bei der normalen Fördermenge des Verfahrens die hydraulische Geschwindigkeit innerhalb der Einfangzone unter ungefähr 100 m/h bleibt.

3. Verfahren nach einem der Ansprüche 1 und 2, **dadurch gekennzeichnet, dass** der Absetzhilfsstoff in dem oberen Abschnitt der Einfangzone an verschiedenen Einspritzstellen, welche voneinander regelmäßig beabständet sind, injiziert wird.

4. Verfahren nach Anspruch 3, **dadurch gekennzeichnet, dass** der Abzieh- oder Entnahmetakt der Schlämme in dem unteren Abschnitt der Einfangzone zwischen 0,5% und 1% der Fördermenge des behandelten Wassers liegt.

5. Verfahren nach Anspruch 4, **dadurch gekennzeichnet, dass** man einen Geschwindigkeitsgradienten in der Ausflockungszone zwischen 50 s⁻¹ und 300 s⁻¹ einhält.

6. Verfahren nach Anspruch 5, **dadurch gekennzeichnet, dass** die in der Einfangzone gebildeten Flocken einen mittleren Durchmesser über ungefähr 3 mm und vorzugsweise zwischen 3 mm und 15 mm aufweisen.

7. Verfahren nach Anspruch 6, **dadurch gekennzeichnet, dass** die Flocken eine kompakte Struktur, welche mehrere eingefangene Körner von Hilfsstoff umfasst, aufweisen.

8. Verfahren nach Anspruch 7, **dadurch gekennzeichnet, dass** die aus der Einfangzone abgezogenen Schlämme regelmäßig mit den aus der Absetzzone abgezogenen Schlämmen gemischt werden, um bei dem Absetzhilfsstoff den gleichen Behandlungs- und Abtrennkreislauf zu verfolgen, wobei dieser letztere in den oberen Abschnitt der Einfangzone erneut eingespeist wird.

9. Verfahren nach einem der vorangegangenen Ansprüche, **dadurch gekennzeichnet, dass** der Absetzhilfsstoff ein anorganisches Material ist, welches eine bedeutende magnetische Suszeptibilität aufweist.

10. Verfahren nach Anspruch 9, **dadurch gekennzeichnet, dass** der Absetzhilfsstoff ein Eisenoxid, insbesondere Magnetit, Samarskit, Franklinit, Ferberit, Pyrrhotit ist.

11. Verfahren nach einem der vorangegangenen Ansprüche, **dadurch gekennzeichnet, dass** der Absetzhilfsstoff aus Magnetit besteht, welcher zu 90% eine mittlere Korngröße zwischen 100 µm und 250 µm aufweist.

12. Verfahren nach Anspruch 11, **dadurch gekennzeichnet, dass** die in die Einfangzone injizierte Magnetitkonzentration zwischen 3 g/l und 4 g/l von behandeltem Wasser beträgt.

13. Verfahren nach einem der vorangegangenen Ansprüche, **dadurch gekennzeichnet, dass** der Absetzhilfsstoff von den Schlämmen abgetrennt wird und durch eine Magnetisierungsvorrichtung in zwei Schritten rückgewonnen wird.

14. Vorrichtung für das Ausführen des Verfahrens nach einem der vorangegangenen Ansprüche, umfassend nacheinander:
- eine Koagulationszone, welche mit einem Bewegungsmittel ausgestattet ist, umfassend eine Rohrleitung für die Einspeisung des zu behandelnden Abwassers, eine Rohrleitung für die Einspeisung des Koagulationshilfsstoffs und eine Rohrleitung zum Abziehen des Abwassers aus der Koagulationszone;
- eine Ausflockungszone, welche mit einem Bewegungsmittel ausgestattet ist, umfassend eine Rohrleitung für die Einspeisung des zu behandelnden Abwassers, eine Rohrleitung für die Einspeisung des Ausflockungshilfsstoffs und eine Rohrleitung zum Abziehen des Abwassers aus der Ausflockungszone;
- eine Einfangzone, umfassend eine Rohrleitung zur Versorgung mit dem Abwasser, welches sich absetzen soll, und wenigstens eine Rohrleitung für die Einspeisung des Absetzhilfsstoffs sowie eine Rohrleitung zum Abziehen von wenigstens einem Teil der Schlämme, welche sich abgesetzt haben;
- eine Absetzzone, umfassend eine Rohrleitung für die Einspeisung des Abwassers, welches sich absetzen soll, eine Rohrleitung zum Abziehen des geklärten Abwassers und eine Rohrleitung zum Abziehen der Schlämme, welche sich abgesetzt haben.

15. Vorrichtung nach Anspruch 14, **dadurch gekennzeichnet, dass** sie wenigstens eine Rohrleitung zum Abziehen des Absetzhilfsstoffs umfasst, welche sich stromabwärts von der Einfangzone und/oder von der Absetzzone befindet, wobei diese Rohrleitung zum Abziehen des Absetzhilfsstoffs mit einer Rohrleitung für die Einspeisung des Absetzhilfsstoffs in die Einfangzone verbunden ist unter Zwischenschaltung einer Vorrichtung zur Trennung der Schlämme und des Absetzstoffs.

## Claims

1. Water treatment process, carried out in a decanter on an effluent to be treated containing suspended solids and comprising at least one coagulation step carried out in at least one coagulation zone, at least one flocculation step carried out in at least one flocculation zone, at least one settlement step carried out in at least one settlement zone, and in which part of the sludge containing the suspended solids is separated from the clarified effluent, **characterised in that** a settlement additive is added in at least one capture zone; not stirred, located between the flocculation zone and the settlement zone, the capture zone being sized so as to create a liquid stream in which the settlement additive is injected homogeneously, and **in that** part of the ballasted floc settles directly to the lower part of this capture zone from which it is regularly drawn off.

2. Process according to claim 1, **characterised in that** the hydraulic velocity within the capture zone at the nominal process flow remains below about 100 m/h.

3. Process according to either claim 1 or 2, **characterised in that** the settlement additive is injected in the top part of the capture zone, at different injection points at regular spacings.

4. Process according to claim 3, **characterised in that** the rate of drawing off of the sludge at the bottom part of the capture zone is between 0.5% and 1% of the treated water flow.

5. Process according to claim 4, **characterised in that** a velocity gradient is observed in the flocculation zone equal to between 50 s⁻¹ and 300 s⁻¹.

6. Process according to claim 5, **characterised in that** the average diameter of flocs formed in the capture zone is more than about 3 mm and probably between 3 mm and 15 mm.

7. Process according to claim 6, **characterised in that** the flocs have a compact structure with several captured additive grains.

8. Process according to claim 7, **characterised in that** the sludge drawn off from the capture zone is mixed uniformly with sludge drawn off from the settlement zone to follow the same settlement additive treatment and separation circuit, and the settlement additive will be returned to the top part of the capture,zone.

9. Process according to one of the previous claims, **characterised in that** the settlement additive is a mineral material with a high magnetic susceptibility.

10. Process according to claim 9, **characterised in that** the settlement additive is an iron oxide, particularly magnetite, samarskite, franklinite, ferberite and pyrrhotite.

11. Process according to one of the above claims, **characterised in that** the settlement additive is magnetite with an average size grading at 90%, of between 100 µm and 250 µm.

12. Process according to claim 11, **characterised in that** the concentration of magnetite injected into the capture zone is between 3 g/l and 4 g/l of treated water.

13. Process according to one of the previous claims, **characterised in that** the settlement additive is separated from the sludge and is recovered by a magnetisation device in two steps.

14. Device for embodiment of the process according one of to the previous claims, comprising successively:
- a coagulation zone provided with a stirring means, comprising a duct for adding the effluent to be treated, a duct for adding the coagulation additive and a duct for evacuating the effluent from the coagulation zone;
- a flocculation zone provided with a stirring means, comprising a duct for adding the effluent to be treated, a duct for adding the flocculation additive and a duct for evacuating the effluent from the flocculation zone;
- a capture zone comprising a duct for supplying the effluent to be settled and at least one duct for adding the settlement additive, and a duct for drawing off at least part of the settled sludge;
- a settlement zone comprising a duct for adding the effluent to be settled, a duct for evacuating the clarified effluent and a duct for evacuating the settled sludge.

15. Device according to claim 14, **characterised in that** it comprises at least one settlement additive evacuation duct located on the output side of the capture zone and / or the settlement zone, this settlement additive evacuation duct being connected to a duct for adding the settlement additive in the capture zone, with insertion of a sludge and settlement agent separation device.
